Europäisches Patentamt

European Patent Office

Office européen des brevets

(19)

(11) Veröffentlichungsnummer : **0 102 494**
**B1**

(12)                        **EUROPÄISCHE PATENTSCHRIFT**

(45) Veröffentlichungstag der Patentschrift :
21.01.87

(21) Anmeldenummer : 83107092.5

(22) Anmeldetag : 20.07.83

(51) Int. Cl.⁴ : **B 01 D 13/00**, C 02 F   1/44,
G 01 N 15/06

(54) **Verfahren, Anordnung und Vorrichtung zur Überwachung des Stofftransports in einer Membrantrennanlage.**

(30) Priorität : 02.08.82 DE 3228784

(43) Veröffentlichungstag der Anmeldung :
14.03.84 Patentblatt 84/11

(45) Bekanntmachung des Hinweises auf die Patenterteilung : 21.01.87 Patentblatt 87/04

(84) Benannte Vertragsstaaten :
AT BE CH DE FR IT LI LU NL

(56) Entgegenhaltungen :
EP-A- 0 035 788

(73) Patentinhaber : **CILLICHEMIE Ernst Vogelmann
GmbH & Co.
Bottwarbahnstrasse 70
D-7100 Heilbronn (DE)**

(72) Erfinder : **Kohlheb, Robert, Dr.
Andershäuserstrasse 18
D-3352 Einbeck (DE)**
Erfinder : **Scholl, Horst
Raidweg 48/2
D-7100 Heilbronn (DE)**

(74) Vertreter : **Patentanwälte Dr. Ing. Eugen Maier Dr. Ing.
Eckhard Wolf
Pischekstrasse 19
D-7000 Stuttgart 1 (DE)**

# 0 102 494

## Beschreibung

Die Erfindung betrifft ein Verfahren, eine Anordnung und eine Vorrichtung zur Überwachung des Stofftransports in einer Membrantrennanlage der im Oberbegriff der Ansprüche 1, 6 und 14 angegebenen Gattung.

Als Membrantrennanlage kommt sowohl eine Mikro- oder Ultrafiltrationsanlage als auch eine Umkehrosmoseanlage in Betracht. Das Membrantrennverfahren wird in der Praxis zur Aufbereitung von Trink-, Brauch-, Brack- und Meerwasser, zur Herstellung von Prozeßwasser, insbesondere Reinstwasser für die Halbleiterproduktion, für die Herstellung von Kesselspeisewasser, in der medizinischen Technik für die Haemodialyse, in der Pharmazie für die Herstellung von Infusionslösungen, sowie zur Rückgewinnung von Stoffen, z. B. aus Betriebsabwässern, wie Edelmetalle, Farben u. dgl. eingesetzt. In technischen Anlagen werden Membranmodule verschiedener Bauart, wie Rohrmodule, Wickelmodule, Hohlfasermodule und Plattenmodule sowohl einzeln als auch in Parallel-Hintereinander- und Kaskadenschaltungen verwendet. Es stehen hierfür heute eine Vielzahl von Membranmaterialien zur Verfügung, wie Celluloseester, Celluloseacetat, Polyamid, Polyacrylnitril und poröses Glas.

Obwohl bei allen Membranprozessen eine Vorreinigung vorgenommen wird, bei der im Rohwasser vorhandene Suspensionen, kolloidale und organische Stoffe zum überwiegenden Teil entfernt werden, kommen in der Praxis immer wieder Störfälle vor, die zu einer Quantitäts- oder Qualitätsverschlechterung des Permeats führen können. Hierzu sind insbesondere folgende Störmöglichkeiten zu rechnen :

1. Filmbildung : Makromoleküle wie Flockungsmittel, Schleimstoffe, Gele u. dgl. bilden zusammenhängende filmartige Ablagerungen auf der Membranoberfläche, die zu einer Verblockung führen können. Eine Filmbildung kann bei allen Membranprozessen auftreten und baut sich in der Membran allmählich von vorne nach hinten, also von der Rohwassereintrittsseite zur Konzentratauslaßseite hin auf. Der Permeatdurchfluß wird dadurch kleiner ; man erhält also eine Quantitätsverschlechterung. Als Gegenmaßnahme kommt vor allem eine Spülung der Anlagenmembranen mit einem speziellen Reinigungsmittel, wie Äthanol, in Betracht.

2. Hydrolyse : Hierbei handelt es sich um einen die Membran zerstörenden Effekt, der abhängig von der Membranbeschaffenheit überwiegend bei hohen pH-Werten und höheren Temperaturen eintritt und sich in der Membran von vorne nach hinten aufbaut. Es kommt dabei zu einem makromolekularen Kettenaufschluß, der eine Zerstörung und Aufweitung der Poren und damit eine Zunahme des Permeatdurchflusses und eine Qualitätsverschlechterung zur Folge hat. Zu dem Hydrolyseeffekt kommt es häufig dann, wenn bei einer Spülung der Membranmodule mit einer Reinigungsmittel-Lösung durch einen Fehler in der Reinigungsmitteldosierung die vorgeschriebene pH-Wert-Grenze überschritten wird. Als Gegenmaßnahme steht eine Behandlung mit einem membranstrukturverstärkenden Mittel, beispielsweise mit einem modifizierten Vinylpolymer, zur Verfügung.

3. Scaling : Hierbei handelt es sich um einen Kristallisationseffekt, bei welchem es durch Ausfallen vor allem von Calciumcarbonat, Calciumsulfat, Kieselsäure und anderen Salzen auf der Membranoberfläche zu einer Quantitätsverschlechterung kommen kann. Dieser Effekt wird bei höheren Salzkonzentrationen, niedrigeren Temperaturen, kleineren Strömungsgeschwindigkeiten und schlechterer Turbulenz begünstigt und baut sich an der Membran überwiegend von hinten nach vorne hin auf. Als Gegenmaßnahme kommt insbesondere die Direktosmose mit Hilfe einer konzentratseitig zugeführten starken Salzlösung in Betracht, die zu einer Auflösung der Kalkablagerungen führt. Diese kann durch eine nachfolgende Reinigung mit einem Waschmittel noch unterstützt werden. Zur Verhinderung eines Scaling reicht oft auch bereits eine Konzentratausdrängung durch Permeatrückspülung aus.

4. Fouling : Dieser Effekt tritt auf, wenn Suspensionen, Emulsionen, kolloidale Stoffe sowie organische Stoffe und Mikroorganismen in konzentrierter Form auftreten und sich an der Membranoberfläche ablagern. Bei reinen Oberflächenablagerungen führt dies zu einer Quantitätsverschlechterung. Ebenfalls unter den Begriff Fouling fällt auch das Hindurchwachsen von Mikroorganismen, z. B. Bakterien, durch die Membran in Verbindung mit einer Zerstörung des Membranmaterials ; hierbei kommt es zu einer Vergrößerung der Permeatströmung, verbunden mit einer Qualitätsverschlechterung. Das Fouling baut sich in der Membran bevorzugt von hinten nach vorne auf, kann aber bei sehr starker Konzentration auch gleichmäßig oder von vorne nach hinten aufgebaut werden.

Als Gegenmaßnahme steht wie beim Scaling die Direktosmose mit Hilfe einer Salzlösung von der Konzentratseite her sowie die Reinigung mit einem Waschmittel zur Verfügung. Zur Vernichtung von Mikroorganismen können Desinfektionsmittel wie Formalinlösung, Peressigsäure oder freies Chlor durch die Membranmodule hindurchgeleitet werden. Da das Auftreten von Fouling ein Anzeichen für eine Überkonzentration ist, kann es von vornherein durch die Anwendung einer besseren Vorfiltration, durch eine vorgeschaltete UV-Entkeimung oder durch die Einstellung einer besseren Turbulenz bei der Anströmung der Membran verhindert werden.

Die genannten Gegenmaßnahmen können durchweg nur dann erfolgreich angewandt werden, wenn die betreffende Störung rechtzeitig erkannt wird und noch nicht zu weit fortgeschritten ist. Dies setzt aber eine ständige Überwachung des Stofftransports in der Membrantrennanlage sowie eine Analyse nach den verschiedenen Störeffekten voraus.

Es ist bekannt, Membranprozesse dadurch indirekt zu überwachen, daß von Zeit zu Zeit der sogenannte Verblockungsindex (andere Bezeichnungen : Kolloidindex, Fouling-Index, Silt Density Index) des in die Membrananlage eingespeisten Rohwassers gemessen wird (EP-A-35788). Zur Bestimmung des Verblockungsindex wird bei einem vorgegebenen Druck von 2 bar die Zeit $t_0$ gemessen, die ein vorgegebenes Volumen von 500 ml des zu prüfenden Rohwassers benötigt, um ein Membranfilter mit vorgegebenem Porendurchmesser von 0,45 $\mu$m und einer Filterfläche von 1 350 mm² zu durchdringen. Nach einer bestimmten Testzeit von 15 Minuten, während der die Filtration weiterläuft, wird ein zweites Mal die Zeit $t_{15}$ gemessen, die das gleiche Wasservolumen für ein Durchdringen der Membran benötigt. Der Verblockungsindex ist dann definiert als :

$$VI = \frac{(t_{15} - t_0) \times 100}{t_{15} \times 15} [min^{-1} \%]$$

Der so definierte Verblockungsindex ist also ein Maß für den Grad der Verblockung der Prüfmembran. Diese standardisierte Meßmethode, die meist in hierfür eigens entwickelten Apparaturen durchgeführt wird, wird in der Praxis häufig auch zur indirekten Überwachung von Membrantrennanlagen für die Ultrafiltration und die Umkehrosmose angewandt, in denen vor allem hinsichtlich Porendurchmesser und Systemdruck völlig andere Bedingungen herrschen. Dies muß zwangsläufig zu falschen Schlußfolgerungen führen, wenn man berücksichtigt, daß z. B. eine Membran für die Umkehrosmose eine um zwei Zehnerpotenzen kleinere Porenweite als die standardisierte Prüfmembran aufweist und daher auch noch durch Stoffe von einem Durchmesser von 0,1 bis 0,01 $\mu$m verblockt werden kann, die durch die Standardmembran frei hindurchtreten. Hinzu kommt, daß die Durchführung der Verblockungsindex-Messung einen erheblichen Zeitaufwand erfordert und daher nur stichprobenartig angewandt werden kann. Eine stichprobenartig durchgeführte indirekte Meßmethode ist aber für die meßtechnische Erfassung der vorstehend aufgeführten Störeffekte ungeeignet. Dementsprechend lassen sich aus dem standardmäßig ermittelten Verblockungsindex keine Rückschlüsse auf den augenblicklichen Stofftransport in einer Membrantrennanlage ziehen.

Der Erfindung liegt daher die Aufgabe zugrunde, ein Verfahren zu entwickeln, das eine ständige Überwachung des Stofftransports in einer Membrantrennanlage ermöglicht und das Auftreten von Störeffekten, wie Filmbildung, Hydrolyse, Scaling und Fouling frühzeitig erfaßt, um geeignete Gegenmaßnahmen einleiten zu können.

Eine weitere Aufgabe der Erfindung besteht darin, eine vorteilhafte Meßanordnung für die Durchführung des Verfahrens sowie eine hierfür geeignete Meßvorrichtung zu schaffen.

Zur Lösung dieser Aufgaben werden die in den Ansprüchen 1, 6 und 14 angegebenen Merkmalskombinationen vorgeschlagen. Weitere vorteilhafte Ausgestaltungen und Weiterbildungen der Erfindung ergeben sich aus den Unteransprüchen.

Die Erfindung geht von der Erkenntnis aus, daß die einleitend aufgeführten Störungen sich in den Anlagenmembranen allmählich je nach Art des Effekts bevorzugt von vorne nach hinten (Filmbildung, Hydrolyse) oder von hinten nach vorne (Scaling, Fouling) aufbauen. Diesen Erscheinungen wird erfindungsgemäß dadurch Rechnung getragen, daß sowohl das Einspeisewasser als auch das aus der Anlage austretende Konzentrat unabhängig voneinander unter den an den betreffenden Stellen in der Membrantrennanlage herrschenden physikalischen und chemischen Bedingungen mit einer geeigneten, eine Prüfmembran enthaltenden Meßanordnung überwacht werden. Die Prüfmembranen sind diesen Bedingungen ständig ausgesetzt, so daß sich etwaige Störungen ebenso aufbauen und auswirken, wie in den Anlagenmembranen. Die getrennte Überwachung des Einspeisewassers und des Konzentrats ermöglicht auch eine differenzierte Erkennung der einzelnen Störeffekte unter den an den betreffenden Stellen herrschenden pessimistischen Voraussetzungen. Eine weitere, für die Früherkennung erwünschte verstärkte und dadurch pessimistische Auswirkung der Störeffekte an den Prüfmembranen läßt sich über die Strömungsparameter im Bereich der Membranoberfläche einstellen : Eine Erniedrigung der Parallelgeschwindigkeitskomponente und ein geringerer turbulenter Mischeffekt führt in dem Bereich der Membranoberfläche zu einer erhöhten Konzentrationspolarisation und damit zu einer beschleunigten Verblockung.

An jeder Membran tritt mit der Zeit je nach Belastung des Einspeisewassers eine gewisse Teilverblockung auf, die in einer allmählichen Abnahme des Permeatvolumenstroms resultiert. Diese « natürliche » Abnahme des Permeatvolumenstroms F in Abhängigkeit von der Zeit t läßt sich durch folgende empirische Näherungsformel beschreiben :

$$F(t) = F(1) \, t^{-m}$$

wobei m eine die Belastung des Wassers kennzeichnende Maßzahl in der Größenordnung 0 bis 0,1 bedeutet, wenn t in Stunden in die Formel eingesetzt wird. Unter F (1) ist der Permeatvolumenstrom zu verstehen, der in der ersten Stunde nach der ersten Inbetriebnahme gemessen wird.

Ein Vergleich der nach dem erfindungsgemäßen Verfahren gemessenen Permeatvolumenströme in Abhängigkeit von der Zeit mit den anhand der vorstehenden Formel ermittelten Werten ermöglicht es, beim Auftreten von systematischen Abweichungen in der einen oder der anderen Richtung Rückschlüsse

3

auf Art und Grad vorhandener Störeffekte zu ziehen. Es können untere und obere Schwellenwerte für die Meßwerte vorgegeben werden, bei deren Unter- oder Überschreiten Alarme oder geeignete Gegenmaßnahmen ausgelöst werden können.

Um möglichst gleiche physikalische und chemische Verhältnisse in den Meßanordnungen und der zugehörigen Membrantrennanlage zu schaffen, ist es zweckmäßig, die Prüfmembranen so auszuwählen, daß sie im wesentlichen das gleiche Rückhaltungsvermögen aufweisen wie die Anlagenmembranen und daß sie außerdem vor allem hinsichtlich ihrer pH-Wert-Beständigkeit aus chemisch vergleichbaren Materialien bestehen.

Das durch die Prüfmembranen gelangende Permeat kann zur Messung der betreffenden Volumenströme tropfenweise z. B. mit einer photoelektrischen Anordnung ausgezählt oder in Meßbehältern aufgefangen werden.

Für die Durchführung der indirekten Stofftransportüberwachung in einer Membrantrennanlage wird zweckmäßig eine Meßvorrichtung verwendet, die eine einlaßseitig mit Meßflüssigkeit unter Druck beaufschlagbare Rohrleitung, eine durch einen seitlichen Stutzen in die Rohrleitung einsetzbare, die Prüfmembran enthaltende Membransonde, einen von der Membransonde nach außen führenden Kanal zur Ableitung des durch die Prüfmembran gelangenden Permeats und ein in der Rohrleitung angeordnetes Regulierventil zur Einstellung des Flüssigkeitsdurchsatzes enthält.

Gemäß einer bevorzugten Ausgestaltung der erfindungsgemäßen Meßvorrichtung weist die Membransonde ein mit einer stirnseitigen Fensteröffnung versehenes Sondengehäuse auf, in deren Fensteröffnung die scheibenförmig ausgebildete Prüfmembran angeordnet ist. Die Membran wird dabei zweckmäßig mit einem porösen Stützkörper am Rand der Fensteröffnung festgeklemmt. Das Sondengehäuse kann auf einen Tragkörper aufgesteckt oder aufgeschraubt werden, der den an seinem einen Ende zur Prüfmembran hin offenen und an seinem anderen Ende in ein Röhrchen einmündenden Kanal aufweist und zusammen mit dem Sondengehäuse an dem seitlichen Rohrstutzen befestigbar ist.

Um die Membrantrennanlage auch während und nach der Spülung mit einem Reinigungsmittel auf das Auftreten von gegebenenfalls durch das Reinigungsmittel verursachte Störungen hin überwachen zu können, ist in der Rohrleitung in Strömungsrichtung vor der Membransonde ein verschließbarer Stutzen angeordnet, über den sowohl die Anlage als auch die Meßvorrichtung mit dem Reinigungsmittel beaufschlagbar ist.

Im folgenden wird die Erfindung anhand der Zeichnung näher erläutert. Es zeigen

Figur 1 ein Schaltschema einer Membrantrennanlage mit je einer einlaßseitig und konzentrauslaßseitig angeordneten Überwachungsvorrichtung ;

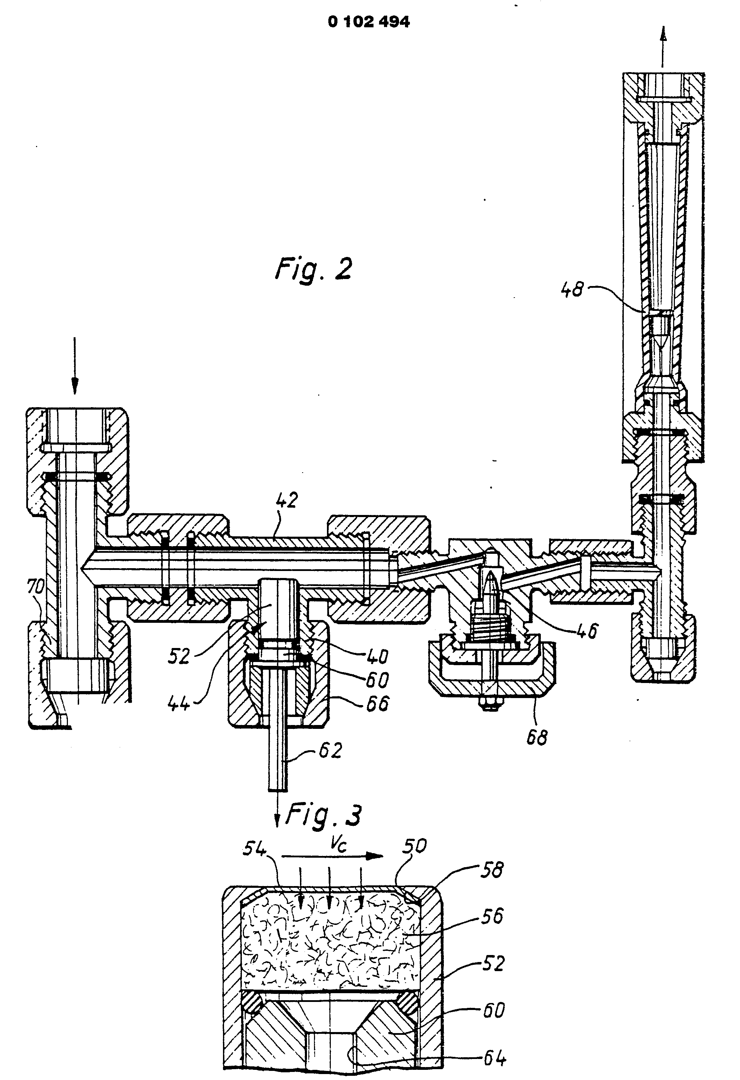

Figur 2 einen senkrechten Schnitt durch eine Überwachungsvorrichtung ;

Figur 3 einen Ausschnitt aus der Membransonde nach Fig. 2 in vergrößerter geschnittener Darstellung.

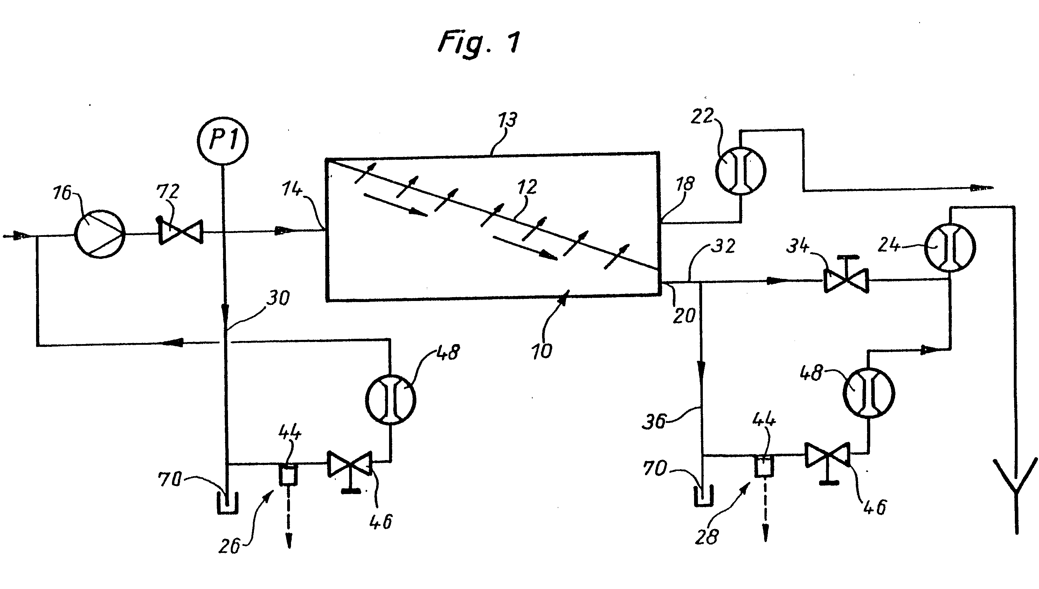

Die in Fig. 1 schematisch angedeutete Membrantrennanlage 10 kann sowohl eine Mikro- oder Ultrafiltrationsanlage als auch eine Umkehrosmoseanlage insbesondere für die Wasseraufbereitung sein. Sie besteht in der Regel aus mehreren parallel- und hintereinandergeschalteten Membranmodulen 12, die in mindestens einem Druckgefäß 13 angeordnet sind.

Auf der Einlaßseite 14 wird das Druckgefäß 13 über eine Hochdruckpumpe 16 mit vorgereinigtem Einspeisewasser unter einem Druck von mehreren zehn bar beaufschlagt. Die Membranen 12 bilden eine selektive Barriere, an der aufgrund der transmembranen Druckdifferenz bevorzugt Reinwasser hindurchtritt und zum Permeatauslaß 18 gelangt, während die abzutrennenden Komponenten im Konzentrat angereichert und mit diesem zum Konzentratauslaß 20 geleitet werden. Der Permeat- und der Konzentratstrom wird ständig mit Durchflußmessern 22, 24 gemessen. Außerdem ist sowohl einlaßseitig als auch konzentratauslaßseitig eine Überwachungsvorrichtung 26, 28 angeordnet, mit denen der Stofftransport in der Membrananlage indirekt überwacht wird, um etwaige Störungen frühzeitig zu erkennen und ihnen mit geeigneten Gegenmaßnahmen entgegenwirken zu können.

Die einlaßseitige Überwachungsvorrichtung 26 weist eine von der Hochdruckseite der Hochdruckpumpe 16 abgezweigte und zu deren Niederdruckseite zurückgeführte Bypassleitung 30 auf, während die konzentratauslaßseitige Überwachungsvorrichtung 28 in einer von der Konzentratleitung 32 vor einem Druckminderer 34 abgezweigten und hinter dem Druckminderer 34 wieder in die Konzentratleitung einmündenden Bypassleitung 36 angeordnet ist.

Die im übrigen baugleichen Überwachungsvorrichtungen 26, 28 bestehen im wesentlichen aus einer durch einen seitlichen Stutzen 40 in ein Rohrleitungsstück 42 eingeführten Membransonde 44, einem in Strömungsrichtung hinter der Membransonde 44 angeordneten Feinregulierventil 46, sowie einem Durchflußmesser 48. Die Membransonde 44 weist ein mit einer stirnseitigen Fensteröffnung 50 versehenes zylindrisches Sondengehäuse 52 auf, in dessen Fensteröffnung 50 eine scheibenförmige Prüfmembran 54 angeordnet ist, die an ihrem Umfang vom Gehäuseinneren her mittels eines porösen Stützkörpers 56 an einer die Fensteröffnung 50 begrenzenden Ringschulter 58 festgeklemmt ist. Das Sondengehäuse 52 ist mit einem Innengewinde auf das Außengewinde eines Tragkörpers 60 aufgeschraubt, der einen an seinem einen Ende zur Prüfmembran 54 hin offenen und an seinem anderen Ende in ein nach außen weisendes Röhrchen 62 einmündenden Kanal 64 aufweist und zusammen mit dem Sondengehäuse 52 mit Hilfe einer Überwurfmutter 66 an dem seitlichen Stutzen 40 angeflanscht ist.

Die freie Oberfläche der Prüfmembran 54 wird von der durch das Rohrleitungsstück 42 fließenden Meßflüssigkeit parallel angeströmt. Das aufgrund der Druckdifferenz durch die Membran 54 hindurchdringende Permeat wird über das Röhrchen 62 nach außen geführt. Dort kann der Volumenstrom des Permeats, beispielsweise durch Tropfenzählung mit Hilfe einer photoelektrischen Meßanordnung oder durch Auffangen in einem Meßbecher gemessen und gegebenenfalls automatisch aufgezeichnet und überwacht werden.

Um vergleichbare Verhältnisse zu schaffen, werden die Prüfmembranen 54 so ausgewählt, daß sie im wesentlichen das gleiche Rückhaltevermögen aufweisen und hinsichtlich ihrer pH-Wert-Beständigkeit aus vergleichbaren Materialien bestehene wie die Anlagenmembranen 12. Auch hinsichtlich der Strömungsverhältnisse werden vergleichbare Bedingungen geschaffen, indem die Strömungsgeschwindigkeit in den Rohrleitungsstücken 42 mit Hilfe der Feinregulierventile 46 zu Beginn der Überwachung auf einen bestimmten Wert in der Größenordnung der Parallelgeschwindigkeitskomponenten in den Anlagenmembranen in der Nähe des Einlasses 14 bzw. des Konzentratauslasses 20 eingestellt und im weiteren Verlauf der Überwachung konstant gehalten wird. Zur Vermeidung von Bedienungsfehlern wird der Betätigungsknopf 68 der Feinregulierventile nach erfolgter Justierung dauerhaft arretiert.

In Strömungsrichtung vor der Membransonde 44 befindet sich ferner ein verschließbarer Anschlußstutzen 70 für die Zufuhr eines Reinigungs- oder Membranregenerierungsmittels, das auf diese Weise sowohl zu den Anlagenmembranen 12 als auch zu den Prüfmembranen 54 gelangt und in seiner Wirkung überwacht werden kann. Die Hochdruckpumpe 16 ist durch einen Rückflußverhinderer 72 vor einem unerwünschten Eindringen von Reinigungs- oder Regenerierungsmittel geschützt.

## Patentansprüche

1. Verfahren zur Überwachung des Stofftransports in einer mit technischen Membranen, insbesondere Membranmodulen, bestückten Membrantrennanlage, an deren Einlaß eine wässrige Einspeiselösung, insbesondere Rohwasser, unter Druck zugeführt, an den Membranen mit zu deren Oberfläche paralleler Geschwindigkeitskomponente vorbeigeleitet und dort aufgrund einer transmembranen Druckdifferenz in einen mit Inhaltsstoffen angereicherten Konzentratstrom und einen durch die Membran gelangenden, mit Inhaltsstoffen abgereicherten Permeatstrom aufgeteilt und zu voneinander getrennten Konzentrat- und Permeatauslässen geleitet wird, dadurch gekennzeichnet, daß auf der Einlaßseite Einspeiselösung und auf der Konzentratauslaßseite Konzentrat unter dem jeweils herrschenden Druck abgezweigt und an je einer im wesentlichen das gleiche Rückhaltungsvermögen wie die Anlagenmembranen aufweisenden Prüfmembran mit zu deren Oberfläche paralleler Geschwindigkeitkomponente vorbeigeleitet wird, und daß die durch die Prüfmembranen gelangenden Permeatvolumenströme kontinuierlich oder in bestimmten Zeitabstänten gemessen werden.

2. Verfahren nach Anspruch 1, dadurch gekennzeichnet, daß die Prüfmembranen aus mit den Anlagenmembranen chemisch vergleichbaren Materialien bestehen.

3. Verfahren nach Anspruch 1 oder 2, dadurch gekennzeichnet, daß die Parallelgeschwindigkeitskomponenten auf der Konzentratseite der Prüfmembranen zu Beginn der Messung auf bestimmte Werte in der Größenordnung der Parallelgeschwindigkeitskomponenten in den Anlagenmembranen in der Nähe des Einlasses bzw. des Konzentratauslasses eingestellt und sodann konstant gehalten werden.

4. Verfahren nach einem der Ansprüche 1 bis 3, dadurch gekennzeichnet, daß das durch die Prüfmembranen gelangende Permeat zum Zwecke der Messung der betreffenden Volumenströme in Form von Tropfen vorzugsweise mit einer photoelektrischen Anordnung gezählt wird.

5. Verfahren nach einem der Ansprüche 1 bis 3, dadurch gekennzeichnet, daß das durch die Prüfmembranen gelangende Permeat zum Zwecke der Messung der betreffenden Volumenströme in Meßbehältern aufgefangen wird.

6. Anordnung für die Überwachung des Stofftransports in einer mit technischen Membranen, insbesondere Membranmodulen, bestückten Membrantrennanlage, mit einem in Strömungsrichtung hinter einer Hochdruckpumpe angeordneten Flüssigkeitseinlaß, einem vor einem Druckminderer angeordneten Konzentratauslaß und einem Permeatauslaß, zur Durchführung des Verfahrens nach einem der Ansprüche 1 bis 5, dadurch gekennzeichnet, daß in Strömungsrichtung hinter der Hochdruckpumpe (16) auf der Seite des Flüssigkeitseinlasses (14) sowie vor dem Druckminderer (34) auf der Seite des Konzentratauslasses (20) je eine Bypassleitung (30, 36) abgezweigt ist, in der eine im wesentlichen das gleiche Rückhaltungsvermögen wie die Anlagenmembranen aufweisende, an ihrer freien Oberfläche durch die abgezweigte Flüssigkeit parallel anströmbare Prüfmembran (54) angeordnet ist, und daß auf der Permeatseite der Prüfmembranen (54) je eine Meßvorrichtung zur Bestimmung und/oder Überwachung des betreffenden Permeat-Volumenstroms angeordnet ist.

7. Anordnung nach Anspruch 6, dadurch gekennzeichnet, daß die einlaßseitige Bypassleitung (30) an ihrem in Strömungsrichtung hinteren Ende in eine zur Niederdruckseite der Hochdruckpumpe (16) führende Leitung einmündet.

8. Anordnung nach Anspruch 6 oder 7, dadurch gekennzeichnet, daß die Konzentratauslaßseitige Bypassleitung (36) mit ihrem in Strömungsrichtung hinteren Ende hinter dem Druckminderer (34) in die das Konzentrat führende Leitung (32) einmündet.

9. Anordnung nach einem der Ansprüche 6 bis 8, dadurch gekennzeichnet, daß in jeder Bypassleitung (30, 36) ein Druchflußmesser (48) angeordnet ist.

10. Anordnung nach einem der Ansprüche 6 bis 9, dadurch gekennzeichnet, daß in jeder Bypassleitung (30, 36) ein Feinregulierventil (46) angeordnet ist.

11. Anordnung nach einem der Ansprüche 6 bis 10, dadurch gekennzeichnet, daß jede Bypassleitung (30, 36) in Strömungsrichtung vor der Prüfmembran (54) einen verschließbaren Anschluß (70) für die Zufuhr eines Reinigungs- oder Membranregenerierungsmittels aufweist.

12. Anordnung nach einem der Ansprüche 6 bis 11, dadurch gekennzeichnet, daß zwischen dem hochdruckseitigen Pumpenanschluß und der Abzweigung der betreffenden Bypassleitung (30) ein Rückflußverhinderer (72) angeordnet ist.

13. Anordnung nach einem der Ansprüche 6 bis 12, dadurch gekennzeichnet, daß die Prüfmembranen (54) aus mit den Anlagenmembranen (12) hinsichtlich ihrer pH-Wert-Beständigkeit vergleichbaren Membranmaterialien bestehen.

14. Vorrichtung zur kontinuierlichen oder diskontinuierlichen Messung des Stofftransports durch eine Prüfmembran, insbesondere für den Einsatz zur indirekten Stofftransportüberwachung in einer Membrantrennanlage, gekennzeichnet durch eine einlaßseitig mit Messflüssigkeit unter Druck beaufschlagbare Rohrleitung (Rohrstück 42), eine durch einen seitlichen Stutzen (40) in die Rohrleitung einführbare, die an ihrer freien Oberfläche von der Messflüssigkeit parallel anströmbare Prüfmembran enthaltende Membransonde (44), einen von der Membransonde (44) nach außen führenden Kanal (64) zur Ableitung des durch die Prüfmembran (54) gelangenden Permeats und ein in der Rohrleitung (42) angeordnetes Regulierventil (46) zur Einstellung des Flüssigkeitsdurchsatzes.

15. Vorrichtung nach Anspruch 14, dadurch gekennzeichnet, daß die Membransonde (44) ein mit einer stirnseitigen Fensteröffnung (50) versehenes Sondengehäuse (52) aufweist, und daß die scheibenförmig ausgebildete Prüfmembran (54) in der Fensteröffnung (50) angeordnet ist.

16. Vorrichtung nach Anspruch 15, dadurch gekennzeichnet, daß die Prüfmembran (54) an ihrem Umfang vom Gehäuseinneren her mittels eines flüssigkeitsdurchlässigen, vorzugsweise porösen, Stützkörpers (56) an einer der Fensteröffnung (50) begrenzenden Ringschulter (58) festgeklemmt ist.

17. Vorrichtung nach Anspruch 15 oder 16, dadurch gekennzeichnet, daß das Sondengehäuse (52) auf einen den Stützkörper (56) gegen die Membran drückenden Tragkörper (60) aufgeschraubt oder aufgesteckt ist, der den an seinem einen Ende zur Prüfmembran (54) hin offenen und an seinem anderen Ende in ein nach außen führendes Röhrchen (62) einmündenden Kanal (64) aufweist und zusammen mit dem Sondengehäuse (52) an dem seitlichen Stutzen (40) befestigbar ist.

18. Vorrichtung nach einem der Ansprüche 14 bis 17, dadurch gekennzeichnet, daß das Regulierventil (46) in Strömungsrichtung hinter der Membransonde (44) angeordnet ist.

19. Vorrichtung nach einem der Ansprüche 14 bis 18, dadurch gekenzeichnet, daß in der Rohrleitung (42), vorzugsweise hinter der Membransonde (44) und dem Regulierventil (46), ein Durchflußmesser (48) angeordnet ist.

20. Vorrichtung nach einem der Ansprüche 14 bis 19, dadurch gekennzeichnet, daß in der Rohrleitung (42) in Strömungsrichtung vor der Membransonde (44) ein verschließbarer Anschlußstutzen (70) für die Zufuhr eines Reinigungs- oder Membranregenerierungsmittels angeordnet ist.

**Claims**

1. Process to control mass transfer in a membrane separation plant equipped with industrial membranes, especially membrane modules, at the inlet port of which an aqueous feed solution, especially untreated water, is piped under pressure past the membranes with a velocity component parallel to their surface and there divided by virtue of a trans-membrane pressure difference into a concentrate stream supplemented with constituent substances and a permeate stream which passes through the membrane and has been depleted of constituent substances, and channelled to separate concentrate and permeate outlet ports, characterised in that feed solution on the inlet side and concentrate on the outlet side are diverted at the respective pressure prevailing and in each case channelled with a velocity component parallel to its surface past an inspection membrane whose retention capacity is essentially the same as that of the membranes of the plant, and in that the permeate volumetric flows passing through the inspection membranes are measured continuously or at given time intervals.

2. The process of claim 1, characterised in that the inspection membranes consist of materials that are chemically comparable to the membranes of the plant.

3. The process of claim 1 or 2, characterised in that when measurement commences the parallel velocity components on the concentrate side of the inspection membranes are fixed at certain values in the order of magnitude of the parallel velocity components in the membranes of the plant near the inlet or concentrate outlet and then held constant.

4. The process of any of claims 1 to 3, characterised in that the permeate passing through the inspection membranes is metered in droplet form, preferably with a photoelectric system, in order to measure the respective volumetric flows.

5. The process of any of claims 1 to 3, characterised in that the permeate passing through the inspection membranes is collected in measuring tanks in order to measure the respective volumetric flows.

6. System to control mass transfer in a membrane separation plant equipped for the implementation of the process claimed in any of claims 2 to 5 with industrial membranes, especially membrane modules, having a fluid inlet port arranged behind a high-pressure pump in the direction of flow, a concentrate outlet port arranged in front of a pressure reducer, and a permeate outlet port, characterised in that a bypass pipe (30, 36) branches off on the side of the fluid inlet (14) behind the high-pressure pump (16) and on the side of the concentrate outlet (20) in front of the pressure reducer (34), respectively, each of said bypass pipes containing an inspection membrane (54) having essentially the same retention capacity as the membranes in the plant and being affluxable parallel to its free surface by the diverted fluid, and in that in each case a metering instrument is disposed on the permeate side of the inspection membranes (54) to determine and/or control the respective volumetric flow of the permeate.

7. The system of claim 6, characterised in that the end of the inlet side bypass pipe (30) which is at the rear in the direction of flow terminates in a pipe leading to the low-pressure side of the high-pressure pump (16).

8. The system of claim 6 or 7, characterised in that the end of the concentrate outlet side bypass pipe (36) which is at the rear in the direction of flow terminates behind the pressure reducer (34) in the pipe (32) conveying the concentrate.

9. The system of any of claims 6 to 8, characterised in that a flowmeter (48) is disposed in each bypass pipe (30, 36).

10. The system of any of claims 6 to 9, characterised in that a fine control valve (46) is disposed in each bypass pipe (30, 36).

11. The system of any of claims 6 to 10, characterised in that each bypass pipe (30, 36) has a locking connector (70) in front of the inspection membrane (54) in the direction of flow for supplying a cleansing or membrane regenerating agent.

12. The system of any of claims 6 to 11, characterised in that a reflux impeder (72) is disposed between the high-pressure side pump connection and the junction of the respective bypass pipe (30).

13. The system of any of claims 6 to 12, characterised in that the inspection membranes (54) consist of membrane materials that are comparable in terms of their pH stability with the membranes of the plant (12).

14. Apparatus to continuously or discontinuously measure mass transfer through an inspection membrane, especially for use in the indirect control of mass transfer in a membrane separation plant, ·characterised by having on the inlet side a pipeline (pipe fitting 42) which admits measurement fluid when under pressure, a membrane probe (44) which can be introduced into the pipeline by means of a crosspiece (40) containing the inspection membrane which is affluxable parallel to its free surface by the measurement fluid, a duct (64) leading to the outside of the membrane probe (44) to discharge the permeate passing through the inspection membrane (54) and a control valve (46) disposed in the pipeline (42) to set the flow rate of the fluid.

15. The apparatus of claim 14, characterised in that the membrane probe (44) has a probe housing (52) provided with a window aperture (50) on its front side, and in that the disc-shaped inspection membrane (54) is disposed in the window aperture (50).

16. The apparatus of claim 15, characterised in that along its circumference the inspection membrane (54) is clamped from inside the housing by means of a brace (56) which is permeable to fluids and preferably porous onto an annular collar (58) which delimits the window aperture (50).

17. The apparatus of claim 15 or 16, characterised in that the probe housing (52) is screwed or mounted onto a support (60) pressing the brace (56) against the membrane, said support exhibiting duct (64) which is open at the end facing the inspection membrane (54) and whose other end terminates in a tube (62) leading to the outside and being affixable together with the probe housing (52) on the crosspiece (40).

18. The apparatus of any of claims 14 to 17, characterised in that the control valve (46) is arranged behind the membrane probe (44) in the direction of flow.

19. The apparatus of any of claims 14 to 18, characterised in that a flowmeter (48) is disposed in the pipeline (42), preferably behind the membrane probe (44) and control valve (46).

20. The apparatus of any of claims 14 to 19, characterised in that a locking connector piece (70) is disposed in the pipeline (42) in front of the membrane probe (44) in the direction of flow to supply a cleansing or membrane regenerating agent.

## Revendications

1. Procédé pour la surveillance du transport de matière dans une installation de séparation à membranes équipée de membranes techniques, notamment de modules à membranes, à l'entrée de laquelle une solution aqueuse d'alimentation, notamment de l'eau brute, est amenée sous pression, puis conduite le long des membranes avec une composante de vitesse parallèle à la surface de celles-ci et, là, par suite d'une différence de pression à travers les membranes, est divisée en un courant de concentré enrichi en constituants et un courant de perméant ayant traversé la membrane et appauvri en constituants, les deux courants étant dirigés respectivement vers une sortie pour le concentré et une sortie pour le perméant, caractérisé en ce que du côté de l'entrée, la solution d'alimentation, et du côté de la sortie pour le concentré, le concentré, sont dérivés sous la pression qui règne du côté respectif et sont conduits chacun à une membrane de contrôle possédant le même pouvoir de rétention que les membranes de l'installation, avec une composante de vitesse parallèle à la surface de ces membranes, et que les courants volumiques de perméant qui traversent les membranes de contrôle sont mesurés de façon continue ou à des intervalles de temps déterminés.

2. Procédé selon la revendication 1, caractérisé en ce que les membranes de contrôle se composent de matières chimiquement comparables à celles des membranes de l'installation.

3. Procédé selon la revendication 1 ou 2, caractérisé en ce que les composantes de vitesse parallèles du côté du concentré des membranes de contrôle sont réglées au début de la mesure à des valeurs déterminées du même ordre de grandeur que les composantes de vitesse parallèles dans les membranes de l'installation à proximité de l'entrée pour le liquide brut et de la sortie pour le concentré, respectivement, et ensuite maintenues constantes.

4. Procédé selon l'une des revendications précédentes, caractérisé en ce que le perméant qui a traversé les membranes de contrôle est, aux fins de la mesure des débits correspondants, compté sous la forme de gouttes, de préférence au moyen d'un montage à cellule photoélectrique.

5. Procédé selon l'une des revendications 1 à 3, caractérisé en ce que le perméant qui a traversé les membranes de contrôle est recueilli dans des récipients de mesure pour la mesure des courants volumiques correspondants.

6. Montage pour la surveillance du transport de matière dans une installation de séparation à membranes équipée de membranes techniques, notamment de modules à membranes, avec une entrée pour le liquide brut (14) disposée en aval d'une pompe à haute pression (72), une sortie pour le concentré (20) disposée en amont d'un réducteur de pression (34) et une sortie pour le perméant (18), pour la mise en œuvre du procédé selon l'une des revendications précédentes, caractérisé en ce qu'en aval de la pompe à haute pression (16) du côté de l'entrée pour le liquide brut (14), ainsi qu'en amont du réducteur de pression (34) du côté de la sortie pour le concentré (20), part une conduite de dérivation (30, 36), respectivement, dans laquelle est disposée une membrane de contrôle (54) qui possède sensiblement le même pouvoir de rétention que les membranes de l'installation et peut être léchée parallèlement à sa surface libre par le liquide dérivé, et que du côté du perméant des membranes de contrôle (54), un dispositif de mesure est associé à chacune de ces membranes pour la détermination ou la surveillance du courant volumique de perméant, ou les deux.

7. Montage selon la revendication 6, caractérisé en ce que la conduite de dérivation (30) du côté de l'entrée pour le liquide brut (14) débouche à son extrémité aval dans une conduite qui conduit au côté basse pression de la pompe à haute pression (16).

8. Montage selon la revendication 6 ou 7, caractérisé en ce que la conduite de dérivation (36) du côté de la sortie pour le concentré débouche par son extrémité aval en aval du réducteur de pression (34) dans la conduite (32) qui conduit le concentré.

9. Montage selon l'une des revendications 6 à 8, caractérisé en ce qu'un débitmètre (48) est monté dans chaque conduite de dérivation (30, 36).

10. Montage selon l'une des revendications 6 à 9, caractérisé en ce qu'un manodétendeur de précision (46) est monté dans chaque conduite de dérivation (30, 36).

11. Montage selon l'une des revendications 6 à 10, caractérisé en ce que chaque conduite de dérivation (30, 36), en amont de la membrane de contrôle (54), comporte un raccord obturable (70) pour l'amenée d'un fluide de nettoyage ou de régénération de ladite membrane.

12. Montage selon l'une des revendications 6 à 11, caractérisé en ce qu'un dispositif anti-retour (72) est monté entre le raccord du côté haute pression de la pompe à haute pression (16) et le point de raccordement de la conduite de dérivation (30).

13. Montage selon l'une des revendications 6 à 12, caractérisé en ce que les membranes de contrôle (54) se composent de matières comparables à celles des membranes (12) de l'installation en ce qui concerne leur résistance à la valeur du pH.

14. Dispositif pour la mesure continue ou discontinue du transport de matière à travers une membrane de contrôle, notamment pour la surveillance indirecte du transport de matière dans une installation de séparation à membranes, caractérisé en ce qu'il comporte une conduite tubulaire (tronçon de tube (42)) à l'entrée de laquelle peut être amené un liquide de mesure sous pression, une sonde à membrane (44) qui peut être introduite par un raccord tubulaire latéral (40) dans la conduite tubulaire (42) et qui contient la membrane de contrôle (54) qui peut être léchée par le liquide de mesure parallèlement à sa surface libre, un canal (64) menant de la sonde à membrane (44) à l'extérieur pour l'évacuation du perméant qui a traversé la membrane de contrôle (54), et un manodétendeur (46) monté dans la conduite tubulaire (42) pour régler le débit du liquide de mesure.

15. Dispositif selon la revendication 14, caractérisé en ce que la sonde à membrane (44) comporte un boîtier de sonde (52) muni d'une ouverture frontale formant fenêtre (50) et que la membrane de contrôle (54) réalisée sous la forme d'un disque est disposée dans l'ouverture formant fenêtre (50).

16. Dispositif selon la revendication 15, caractérisé en ce que la membrane de contrôle (54) est serrée sur son pourtour, en partant de l'intérieur du boîtier de sonde (52), contre un épaulement annulaire (58) qui délimite l'ouverture formant fenêtre (50), au moyen d'un corps formant support perméable aux liquides, de préférence poreux (56).

17. Dispositif selon la revendication 15 ou 16, caractérisé en ce que le boîtier de sonde (52) est vissé ou placé sur un corps porteur (60) qui presse le corps formant support (56) contre la membrane de contrôle (54), ce corps porteur comportant un canal (64) ouvert vers cette membrane de contrôle à une de ses extrémités et débouchant à l'autre extrémité dans un petit tube (62) qui conduit à l'extérieur, et pouvant être fixé avec le boîtier de sonde (52) au raccord tubulaire latéral (40).

18. Dispositif selon l'une des revendications 14 à 17, caractérisé en ce que le manodétendeur (46) est monté en aval de la sonde à membrane (44).

19. Dispositif selon l'une des revendications 14 à 18, caractérisé en ce qu'un débitmètre (48) est monté dans la conduite tubulaire (42), de préférence en aval de la sonde à membrane (44) et du manodétendeur (46).

20. Dispositif selon l'une des revendications 14 à 19, caractérisé en ce que dans la conduite tubulaire (42), en amont de la sonde à membrane (44), un raccord tubulaire obturable (70) est monté pour l'amenée d'un fluide de nettoyage ou de régénération de la membrane de contrôle (54).

Fig. 1

0 102 494

Fig. 2

48

42

70

52          40
44          60
66

62

Fig. 3

54      $V_c$      50          58

56

52

60

64

2